# EUROPEAN PATENT SPECIFICATION

(11) **EP 4 099 155 B1**
(45) Date of publication and mention of the grant of the patent: **20.12.2023**
(21) Application number: 22186986.0
(22) Date of filing: 19.03.2018
(51) Int. Cl.: G06F 8/65

(54) **METHOD AND APPARATUS FOR UPDATING DEVICES IN A REMOTE NETWORK**
VERFAHREN UND VORRICHTUNG ZUR AKTUALISIERUNG VON VORRICHTUNGEN IN EINEM ENTFERNTEN NETZWERK
PROCÉDÉ ET APPAREIL DE MISE À JOUR DE DISPOSITIFS DANS UN RÉSEAU DISTANT

(43) Date of publication of application: 07.12.2022
(62) Divisional of application: 18714084.3
(73) Proprietor: Huawei International Pte. Ltd., Singapore 486066 (SG)
(72) Inventor: LIN, Hsiao-Ying, Shenzhen, 518129 (CN); LI, Tieyan, Shenzhen, 518129 (CN); NACCACHE, David, 75230 Paris (FR); YANG, Yanjiang, Shenzhen, 518129 (CN); ZHANG, Mingming, Shenzhen, 518129 (CN); ZHAO, Xiaopeng, Shenzhen, 518129 (CN)
(74) Representative: Epping - Hermann - Fischer

(56) References cited:
- US-A1- 2005 256 614
- US-A1- 2016 371 076

## Description

### Technical Field

The invention relates to updating of devices, in particular updating of controllers in vehicles. An aspect includes providing a compatible update for the remote controllers according to awareness of features of the remote network, particularly inter compatibility of the controllers. Another aspect not covered by the claims is providing error handling for update errors.

### Background

Firmware and embedded software are provided in devices, and may for example provide specific functionality or be the operating system of the controller. It is often possible to update the firmware or software of the controller by means of a patch. Herein, the terms "update" and "patch", and their corresponding forms are used interchangeably for convenience.

Automotive is transforming from mechanical-based to electronic-based design. The in-vehicle devices such as controllers, e.g. electronic control units (abbreviated to ECUs) used in such vehicles as embedded systems may also be updated.

There may be several ECUs in any particular vehicle, with responsibility for controlling different parts of the electrical system or subsystems of the vehicle. An ECU may comprise, for example, the engine control module or the brake control module or the transmission control module. The ECU may exist in a complicated system, having various structure and configurations, and which may also vary between nominally the same vehicle due to design iterations, parts availability, other updates provided to each of the ECUs.

Moreover, as some automotive vehicles have connectivity to an external network, such as to the internet, the ability to update firmware/software over-the-air (abbreviated to FOTA/SOTA respectively) has become a feature of said vehicles.

However, this capability is a double-sided blade. On the one hand, new data, new functions, or bug fixing can be delivered over the air, which saves the car owners' time and the car makers' effort. On the other hand, each patch package should be correct for and compatible with the specific targeted vehicle. Otherwise, it may cause malfunction of controllers in vehicles. As a consequence, the mechanical components may be damaged due to improper configurations and the system enters an unstable or unpredictable state, which introduces not only financial loss but also safety issues.

A related aspect is security. Given that the FOTA/SOTA interface exists, it is possible for unauthorized third parties to hack and remotely control the vehicle.

Current solutions to these issues are identified below.

Document "A Framework for Self-Verification of Firmware Updates over the Air in Vehicle ECUs", by Nilsson, Lei Sun, Tatsuo Nakajima, IEEE GlobalCom 2008 provides a hash-and-sign approach to provide the authenticity and integrity of patch packages in automotive areas. The approach employs a control flow of how an in-vehicle controller is patched and uses a hash-chain technique to guarantee the integrity of the patch. In-vehicle controllers are considered individually.

Patent publication US20030221190A1 proposes a mechanism to update a group of controllers or controllers. A controller is selected as a reference. Other controllers are compared with the reference to ensure they have the same architecture and software features. When the consistency holds for the group of controllers and the patch is compatible for the referenced controller, the patching process is initiated in parallel for all controllers. In this system setting, controllers are homogeneous.

Patent publication US20160170775A1 proposes a compatibility-aware patch system. For each in-vehicle controller, there is a multi-module coordinator feature (MMCF) function block. Patches for controllers are packed into one package. After downloading the patch package, each controller executes the MMCF function block for compatibility checking. Controllers interact with each other when needed. Depending on the checking result, each controller decides whether or not to perform the patch process. The multi-module compatibility feature is provided in each controller, which introduces a computation cost for each controller.

Patent publication US2016371076A1 discloses a method for upgrading vehicle electronic control units (ECUs) in a vehicle. A Policy Manager is utilized to generate control information for the updates including a vehicle, vehicle models, and or groups of vehicles that is to be updated, identifies the corresponding ECUs and ECU flash memory data images to be updated, and determine prerequisites to each update, update scheduling and notifications to beI provided.

Patent publication US2005256614A1 discloses a method for electronic control units (ECU) software updating comprising identifying vehicle groups for software updating, determining vehicles within the vehicle groups, preparing a software update package for each of the vehicles and the software update package is transmitted and installed in at least one target ECU for each of the vehicles. Further, identifying vehicle groups for software updating also includes preliminary software update planning, such as establishing a target ECU software version, determining ECU update criticality, identifying software dependencies with other ECUs, and/or establishing an up-date flash sequence when software dependencies exist.

### Summary

An objective of embodiments of the invention is to provide a solution which mitigates or solves the drawbacks and problems of the current solutions. The invention is defined in the appended claims, embodiments related to handling errors occuring during an update procedure of controllers do not belong to the claimed invention, but are considered useful for understanding the claimed invention.

The above and further objectives are achieved by the subject matter of the independent claims. Further advantageous implementation forms of the invention are defined by the dependent claims. Further implementation forms will be apparent from the description and the figures.

According to a first aspect of the invention the above mentioned and other objectives are achieved with an administration module for a server, wherein the administration module is configured to:-
- formulate a policy for governing an update for specific one or more controllers comprised in a group of controllers in a remote network in a vehicle,
wherein the policy is formulated based on context information, which comprises at least one of information about: compatibility of the said specific one or more controllers in the group of controllers in the remote network of the vehicle, compatibility between controllers in the group of controllers in the remote network of the vehicle.

The context information may further comprise at least one of information about: hardware of the said specific one or more controllers, structure of the said specific one or more controllers, topology of the remote network.

The administration module may be a hardware module, or may be a software module or combinations thereof.

The administration module may comprise suitable stuctures and components for formulating the policy. Suitable structures may include memory, bus, memory controller, input and output interfaces and a processor.

The server may be a server of a service provider, or any third party authorized server which is capable of hosting the administration module.

The server may also comprise suitable structures and components of servers known to those skilled in the art. Further, the server may comprise a transmitting modulewhich is configured to transmit the policy to a vehicle for performing an update according to the policy.

The server may receive an update from an update generation centre, or be capable of generating an update itself. The update may be generated to be in compliance with the policy, or parts of the update may be selectively combined so that the resulting package is in compliance with the formulated policy.

The policy governs the update by being related to the update. The policy may govern the update by determining or specifying whether the update is compatible before the policy is sent. The policy may comprise any one or more of instructions, code, parameters which relate to how to perform the update of the controllers in remote network. The policy may give these at various level of granularity, such as at least one of the individual controllers, a group of controllers, groupings of controllers in a group of controllers.

An update or patch may be an update of the software data, a bug fix for a software application, a newly provided function for certain software or a different version of the firmware of a controller. The skilled reader will be aware of other examples of updates or patchs.

A specific controller may be a targeted controller i.e. a controller which the policy and its associated update are intended for. For efficiency of update and considering the complexity of the remote network and the compatibility issues, more than one controllers may be targeted in a policy.

A controller may be a control unit, or an ECU as disclosed above. A control unit may have specific structure and compatibility capabilities as disclosed herein. Preferred embodiments of ECUs include at least one of: a vehicle controller unit, a body controller, a battery manage unit, a battery controller unit and an ADAS Main Controller. Preferably the controller controls embedded systems of the vehicle related to primary functions of the vehicle i.e. the vehicle's locomotion, but not necessarily auxiliary systems such as audio or visual entertainment which do not affect the vehicle's locomotion.

Controllers may be grouped according to the topology of the remote network. For example, controllers connected over the same bus may form one group. In another example, all the controllers connected to one domain controller in the remote network may form one group. In another example, a plurality of groups of controllers may exist, each with their own respective domain controller and optionally agent module. A central controller may be used with or without the domain controllers. The controllers in any group may be heterogeneous or homogenous, each comprising a grouping, without limitation. Heterogeneous may mean that controllers have different hardware or different functionality. Homogenous may mean that controllers have the same hardware and the same functionality, for instance, a group of battery controllers where each controller controls a battery cell.

The remote network may be all or part of a system, such as the electrical system of a vehicle, which is not continuously connected to another network. The remote network may be well structured, which may mean that the network has a predefined network topology. The topology is fixed or rarelymodified.

The remote network may have interfaces for network access, for example, to the internet. The remote network may be in a different domain to the admininistration module. Preferably, the remote network is a network which can be mobile by virtue of being deployed as part of a vehicle, and interconnects the ECUs in the vehicle. Other interfaces and displays may be present. In the remote network, the ECU individually or in groups may be connected to a central controller, or via a domain controller which themselves have interfaces. Other configurations are possible. The remote network may not include the server or administration module.

Vehicles may be ground-based vehicles such as automobiles, motorbikes, trucks, irrespective of the power source or means of propulsion. Other vehicles with controllers may also be deemed as vehicles, for example water and air craft.

Context information is used when formulating the policy. According to the invention the context information is provided by the remote network, such as by a policy verification module, to the administration module before formulating the policy. Some context information, such as the remote network topology and controllers hardware information, may also come from the designer (e.g. manufactory company or design company of the controllersor remote network) as a default system setup information.

The compatibility of the said specific one or more controllers in the group of controllers may provide general information on which versions of the update each controller can use.

The information about compatibility between controllers in the group of controllers may provide information or indication on whether the controllers in the group of controllers have dependency relations on the update and/or between each controller. For example, whether each controller can only be updated by successfully updating the controllers with each in-sequence version of the update, or whether any update can be skipped. In another example, whether a controller can be updated depends on the successful update of a preceding controller in the same group of controllers. Information may also be provided on whether the specific controllers are to undergo atomic (i.e. all or nothing) update as a group or grouping. Corresponding instructions or parameters may be provided in or derivable from the policy.

Information about hardware of the said specific one or more controllers may comprise information or indication on whether the controllers in a group are homogenous, and so may be updated together, or are different i.e. heterogeneous. A group of controllers may comprise groupings of homogeneous and heterogeneous controllers. Each grouping may have its own information without limitation. Heterogeneous controllers may have mutually different hardware components and system configuration. Homogenous controllers with the same functionality may be updated together by using the same patch. Heterogeneous controllers may be updated together (atomic update) as well, but by using different patches.

The information about the structure of the said specific one or more controllers or topology of the remote network may indicate how the controllers are interconnected, whether there is a central or separate domain controller(s) for each group of controllers, where the patch agent(s) are located.

By using a policy formulated to take account of the aspects of the remote network, the controllers undergoing update have a degree of confidence that the update will be compatible. Thus compatibility is improved. Further, use of the policy offloads verification work from the or each controller. Further, air interface resources are saved since the likelihood of downloading an incompatible update is reduced.

An implementation form of an administration module according to the first aspect, wherein the compatibility of the specific one or more controllers defines whether the controlles is compatible individually with the update; or
the compatibility between said specific one or more controllers in the group defines whether there are dependency relations in any sequence of updates of the controllers in the group of controllers, and/or whether the controllers in each group are a homogenous group for atomic update or comprise heterogeneous groups.

An advantage is that by defining, the policy is tailored to the specific remote network, which may have a multitude of potential configurations.

In general herein, the use of "or" may comprise the meaning "and" as well as "or". Any list of parameters should be deemed as including each parameter individually as well as any combinations of those parameters.

An implementation form of an administration module according to the first aspect, wherein the policy comprises an installation policy comprising update installation instructions relating to the compatibility of the controllers, for the specific one or more controllers in each group of controllers. The installation policy may alternatively or additionally comprise update instructions relating to the compatibility between the controllers, for the specific one or more controllers in each group of controllers.

The update installation instructions may specify which controllers are to undergo update, in which groups, and which version of the update should be applied to each controller or each group of controllers. The instructions may specify further information. An advantage of specifying for specific controllers is that the likelihood of success of update is improved.

An implementation form of an administration module according to the first aspect, wherein the administration module is further configured to provide installation criteria relating to parameters of the remote network, in particular the installation criteria comprise one or more of: status of a system the remote network is located in, available power supply, available storage space, connectivity of the remote network, mobility of the remote network, velocity of the remote network.

The installation criteria are preferably provided as part of the policy, and comprise criteria related to the status of the remote network that should be met in order for successful update. For example, the mobility and velocity of the remote network have an effect on connectivity as the vehicle moves from cell to cell. The mobility may be specified as whether the vehicle is in a parking state and which gear is engaged. The type of network connectivity including signal strength and speed may be included in the criteria. The status of a system may comprise "parking mode", "driving mode", or "standby mode", or any other mode. When the installation criteria are met, then the update may be implemented.

An implementation form of an administration module according to the first aspect, wherein the administration module is further configured to provide error handling information for the update.

Preferably the error handling information is provided as part of the policy. The error handling information may comprise instructions, procedures or parameters for error detecting and/or error handling of update-originating errors.

An implementation form of an administration module according to the first aspect, wherein the error handling information comprises error handling configuration information for the event of an error occurring during update of the one or more controllers, particularly comprising rollback procedures or a number of update retry attempts.

The error handling configuration information may specify what to do in the event that an update fails. For example, if in a group of homogeneous controllers, if update of one fails, the configuration information specifies to retry a number of times. If those retries still fail, all the controllers in the homogenous group may be specified to be rolled back to the pre-update version of the software. Similar instructions may be provided for each sub-set i.e. grouping of controllers in a heterogeneous group. For when there is one-way dependency of a controller on successful update or sequence, the number of retries may also be specified.

An implementation form of an administration module according to the first aspect, wherein the administration module is configured to prepare the update for the said specific one or more controllers in compliance with the policy.

By preparing the update, the administration module has control over the contents of the update and compatibility.

The update and / or policy may be protected, for example by being hashed and signed before being downloaded. This provides for integrity and authenticity.

An implementation form of an administration module according to the first aspect, wherein the administration module is provided in a server, wherein the server is configured to send the policy and the update for the said one or more controllers, particularly to send the policy and the update together in a package.

The administration module may first prepare the update according to the policy, and then may send the update, optionally together with the policy, to the remote network. The update and the policy may also be sent separately. Sending the update together with the policy provides a degree of assurance that the sent policy is for the sent update. Further advantages to sending together may derive from the state of the vehicle, such as the connectivity of the remote network, which may vary especially when the vehicle is moving.

According to a second aspect of the invention the above mentioned and other objectives are achieved with an agent module for a remote network of a vehicle, comprising
the agent module is configured to implement an update procedure according to a policy governing the update, for specific one or more controllers comprised in a group of controllers in the remote network,
wherein the policy comprises an installation policy comprising respective update installation instructions relating to the compatibility of the controllers, for each of the specific one or more controllers in each group of controllers.

The agent module may be installed on a vehicle side, and may be part of a system comprising the policy verification module, the agent module, and an interface configured to receive a policy from the administration module. The remote network may comprise the controllers. The system may comprise the remote network.

The update procedure may be an update process comprising specific actions to be taken to perform update, some or all of which are generally known to the agent module. The installation instructions may comprise specific instructions of how to perform the update process, which actions to perform and when, for which controllers or groups or groupings of controllers, which actions to modify. The specific instructions may comprise parameters or values provided for example in a table or fields, which the agent module obtains by e.g. parsing and provides the result to the update process.

It will be understood that the administration module and the agent module are configured to communicate with each other, and by receiving the policy and update the agent module can implement the update according to the policy. The agent module may implement only parts of the update, depending on which parts pass verification.

Preferably the agent module is present in the remote network, such as located in a system of the vehicle. The agent module may be flexibly located in the remote network. For example, the agent module may be located in a central controller in the remote network. Alternatively, an agent module may be located in each of the domain controllers of the ECUs. Preferably, the agent module is not located in any ECUs.

However, it is not necessary that any agent module is present for a benefit to be achieved. Rather, by formulating the policy based on the context information, the administration module provides a degree of assurance before the update is sent that the update should be compatible with the specific controllers. On the other hand, providing the agent module, so that the agent module and the administration module can cooperate together provides a further degree of assurance.

The agent module may be a hardware module or a software module or firmware or combinations thereof. The agent module may be instructions of a computer program implemented by a processor. The agent module may be circuits configured to perform the function of the agent module.

An implementation form of an agent module according to the second aspect, wherein the policy further comprises error handling configuration information for the event of an error occurring during update of the one or more controllers, particularly comprising rollback procedures or a number of update retry attempts.

The agent module may handle error detection and error handling as disclosed herein.

According to a third aspect of the invention the above mentioned and other objectives are achieved by a policy verification module, comprising
the policy verification module is configured to:-
- verify, for the specific one or more controllers, compatibility of the policy originating from the administration module;
- determine, according to the result of verification, which parts of the update to be used in an update procedure.

The policy verification module may provide version control of the updates. Updates will come in different versions as they are developed. Some versions are suitable for certain controllers, whereas others are not. An advantage of the policy verification module is that the formulated policy is verified against information about the controllers. This provides a further degree of assurance.

As the policy is provided in levels of granularity, the policy verification module may determine which corresponding parts of the update pass verification, and so should be installed.

Furthermore, in the event of various circumstances, such as a mistake in the context information about the controllers communicated to the administration unit, an intervening change in the controllers, or a policy being formulated with a mistake, the policy verification module may detect such and prevent the installation of the whole or parts of the update.

The policy verification module may also check the installation criteria against the current status of the remote network. If the installation criteria are met, and the policy passes verification, the policy verification module may instruct the update agent to initiate update.

It will be understood that the policy verification module provides an additional advantage as part of a system or architecture comprising the administration module, the agent module and the policy verification module.

The policy verification module may be flexibly located. For example either on the vehicle as part of the remote network, or on another equipment such as a mobile terminal which can also communicate with the remote network. Further, the verification module and the agent module may be combined, or each comprise sub modules.

An implementation form of a verification module according to the third aspect, wherein the policy verification module is configured to obtain context information and provide the context information to the administration module according to the first aspect.

By timely collecting and providing the context information, the policy can be formulated on context information which is up to date. The context information may be provided regularly, when requested, initiatively, or otherwise. Preferably, the context information is provided to the administration unit via a communication from the remote network before the policy is formulated.

According to a fourth aspect of the invention the above mentioned and other objectives are achieved by a network comprising the administration module as disclosed herein, the agent module as disclosed herein, and the policy verification module as disclosed herein.

The administration module, the agent module and the policy verification module comprise an end to end architecture, which formulates a compatible policy, verifies the policy and implements the update, preferably with error handling functionality. The network may comprise a logical network, with each of the three modules comprising a logical entity.

An aspect of the invention may provide a method of updating corresponding to the configured functions provided by at least one of the administration module, the verification module and the agent as disclosed herein. A method of updating may be provided by a network comprising the administration module and the agent module, and optionally together with the verification module.

According to a fifth aspect of the invention the above mentioned and other objectives are achieved by a method for updating controllers in a network of a vehicle, the method comprising:
- formulating a policy comprising update installation parameters relating to the compatibility between specific controllers in the network;
- sending the policy and a corresponding update for the specific controller in the network, the corresponding update is formulated to be compatible with the specific controllers according to the update installation parameters.

The policy and update installation parameters and compatibility are those as disclosed herein.

The policy and /or the update is formulated to be compatible with the targeted specific controllers. By formulating before sending, the downloading of inapplicable updates is avoided.

An implementation form of the method according to the fifth aspect, the method further comprising:
- before formulating the policy, receiving context information relating to compatibility between the specific controllers in the network.

By timely receiving the context information, the policy is specific to the targeted controllers.

An implementation form of the method according to the fifth aspect, the method comprising:
- implementing the update according to the update installation parameters in the policy, by an update agent in the vehicle which is responsible for update of a plurality of controllers.

Each update agent may communicate with and has responsibility over the update for several controllers. Thus no additional hardware, such as a MMCF, or instructions are needed for each controller to verify the update.

An aspect of the invention may provide a method of error handling corresponding to the configured functions provided by at least one of the administration module, the verification module and the agent as disclosed herein.

According to a sixth aspect of the invention the above mentioned and other objectives are achieved by a method of handling errors in an update procedure of controllers in a remote network of a vehicle, comprising
- initiating, in the remote network, the update procedure for each of the controllers;
- processing an update error according to error handling configuration information associated with the update, error handling configuration information particularly comprising rollback procedures or a number of update retry attempts.

Controllers in a group or grouping may require to each have the same version of software. If updating partially succeeds, i.e. some are updated but others in the same group are not, the resulting system may suffer from instability or bugs. When updating fails for a controller in that group or grouping, the error can be handled by first trying the update a number of times. If a retry attempt fails, the already updated controllers in that group or grouping can be rolled back to a version which is compatible with the controller for which update failed. Preferably they are all rolled back to the same version, which may be the version before update was attempted. Error handling configuration information may specifies retry attempts or when or which version to roll back to.

Error handling configuration information may be associated with the update by being specifically for that update. A field may specify the update version or information may be provided in other ways.

An implementation form of the method according to the sixth aspect, wherein the update procedure is performed according to update installation parameters relating to the compatibility of and/or between the controllers in the remote network.

Embodiments of the invention also relate to a computer program, characterized in code means, which has instructions for processing means such as a processor to execute any method according to the invention. Thus, when the computer program is run on the processing means any of the said methods is performed. Further, the invention also relates to a computer program product which may comprise a computer readable medium and said mentioned computer program, wherein said computer program is included in the computer readable medium, which may comprise of one or more from the group: ROM (Read-Only Memory), PROM (Programmable ROM), EPROM (Erasable PROM), Flash memory, EEPROM (Electrically EPROM) and hard disk drive.

The methods, systems and modules described herein may be implemented as software in a processor, in a micro-controller or in any other side-processor or as hardware circuit within an application specific integrated circuit, ASIC or in a field-programmable gate array which is an integrated circuit designed to be configured by a customer or a designer after manufacturing - hence "field-programmable".

The invention can be also implemented in digital electronic circuitry, or in computer hardware, firmware, software, or in combinations thereof, e.g. in available hardware of conventional controllers or in new hardware dedicated for processing the methods described herein.

The administration module, verification module and agent module may be logical or virtual network components.

Embodiments of the invention provide the advantage that the update is more likely to be compatible with the targeted controllers. Verification work of the update on the remote network side and wastage of network resources in transporting the update are also reduced. Embodiments of the invention also provide for fault detection during update and error handling during update, which improves the stability and functionality of the resulting updated controllers in the remote network. The fault detection may be provided with or separately to the policy governing the update.

Further applications and advantages of the invention will be apparent from the following detailed description.

### Brief Description of the Drawings

The appended drawings are intended to clarify and explain different embodiments of the invention, in which:
Fig. 1 shows an overview of an architecture comprising an administration module according to an embodiment of the invention.
Fig. 2 shows an exemplary implementation according to an embodiment of the invention, in which the administration module is functionally part of a server, and the agent and verification modules are in a remote network comprising control units.
Fig. 3 shows an exemplary implementation according to an embodiment of the invention which illustrates communication flow between the modules for implementing update.
Fig. 4 shows examples of control units and network topology in a remote network of a vehicle.
Fig. 5 illustrates an exemplary embodiment of the invention in which the policy specifies the actions to be taken for each of the respective ECUs.
Fig. 6 illustrates an alternative exemplary embodiment of the invention in which ECU are connected directly to a central controller.
Fig. 7 illustrates an alternative exemplary embodiment of the invention in which the verification module is installed in a separate controllers.
Fig. 8 shows some steps of a method of updating controllers in an exemplary embodiment of the invention.
Fig. 9 shows some steps of a method of processing an update error during an update in an exemplary embodiment of the invention.

### Detailed Description

In the figures, identical reference signs denote identical or at least equivalent elements, parts, units or steps. The same series may indicate identical or functionally equivalent parts but in different Figures. In addition, it should be noted that all of the accompanying drawings are not to scale

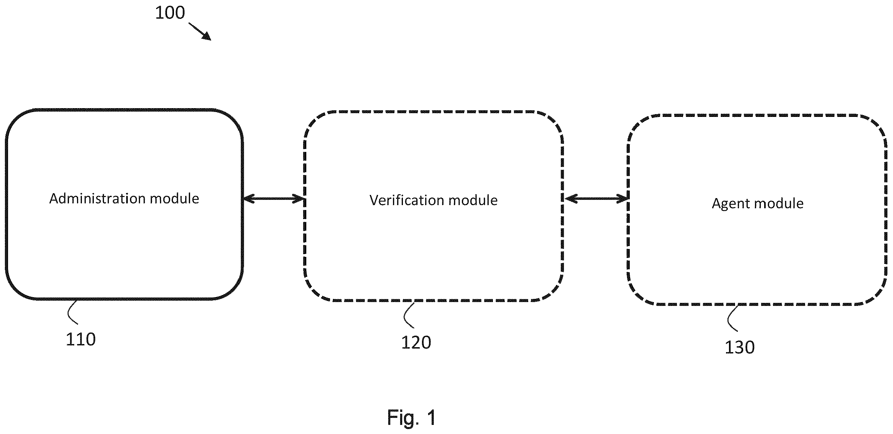

Fig. 1 shows an administration module 110 according to an embodiment of the invention. The agent module may define and provides the policy of a patch package. That may include any of update installation instructions relating to the compatibility of and/or between the controllers (also referred to as dependency relations), provide installation criteria relating to parameters of the remote network (also referred to as preconditions) and error handling information. The administration module formulates the policy according to context information which is known to the administration module.

The administration module 110 may be a standalone controllers or may be part of another controllers. For example, the administration module 110 may be an integrated part of a radio network node, e.g. a base station, or of a central network node, e.g. a radio network controller. The administration module may be provided in a server. The administration module 110 comprises in an embodiment a processor configured for processing data. The administration module 110 may in an embodiment also comprise further parts, such as a transceiver, a memory known to the skilled person. In one such embodiment administration module 110 may be coupled to a transceiver and a memory by means of suitable communication means known in the art.

By using the transceiver, the administration module 110 is configured to communicate with other network controllers, and ultimately with the agent module, via suitable wired and/or wireless communication interfaces.

In one embodiment, the processor may be a dedicated processor for executing any of the methods and/or algorithms according to the invention. In some embodiments, the processor of the administration module 110 may be shared with other functions.

Fig. 1 further shows a verification module 120 and an agent module 130, each according to other embodiments of the invention. These modules are shown in dashed lines to indicate that they each individually provide additional advantages when used with the administration module. The double headed arrows between each of the modules indicate that the modules can communicate with each other. Further, the administration module 110 is capable of communicating directly with the agent module. The administration module 110, verification module and agent module 130 together comprise an architecture 100 for governing update.

The verification module may verify, for specific one or more controllers, compatibility of a policy originating from the administration module. The verification module may determine, according to the result of verification, which parts of the update to be used in an update procedure. The verification module provides version control and compatibility checking amongst a network of controllers by taking into account dependency relations between the controllers. The verificaton module may also provide log patching status or results reporting.

The agent module may implement an update procedure according to a policy governing the update, for specific one or more controllers comprised in a group of controllers in a remote network, wherein the policy comprises an installation policy comprising respective update installation instructions relating to the compatibility of the controllers, for each of the specific one or more controllers in each group of controllers. The agent module may patch targeted controllers according to the policy. The agent module may, when patching fails at certain controllers, retry patching or rollback related other controllers e.g. controllers.

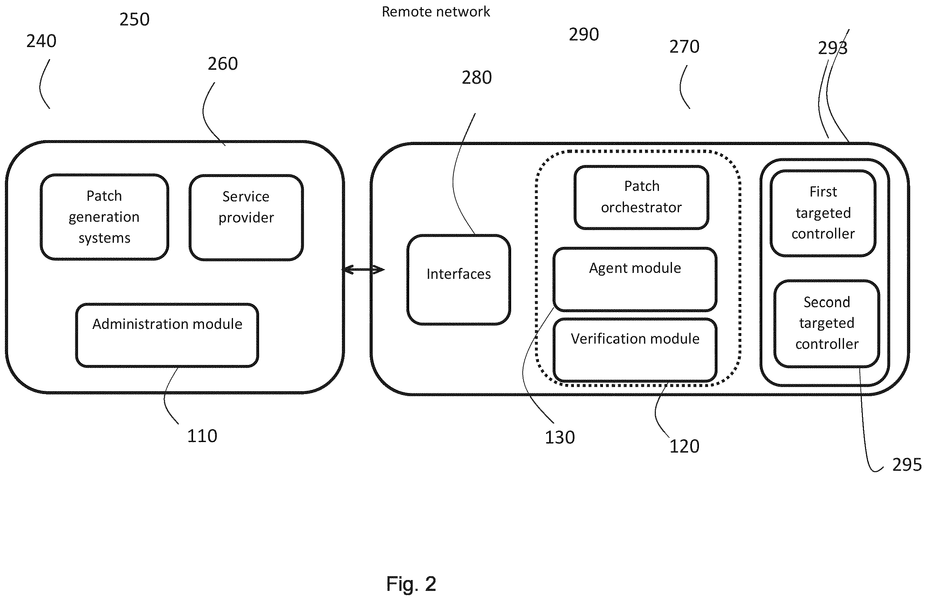

Fig. 2 shows an embodiment of the invention, in which the administration module 110 is located in a server 240, and the verification module 120 and the agent module 130 are located in a remove network 270. A separation between the remote network 270 and the server or servers 240 is illustrated by a dotted vertical line.

The servers 240 comprise or are communicable with patch generation systems 250 and service provider 260. Patch generation systems 250 and service provider 260 may be located with, in communication with or functionally part of the administration module 110. The service providers may offer online services that the remote network can download updates from the service providers' systems (such as website servers). The patch generation system may generate patches for updating. To guarantee integrity and authenticity, patches may be hashed and signed before being provided to a remote network.

The remote network 270 in this exemplary embodiment is shown as comprising interfaces 280, patch orchestrator 290, verification module 120, agent module 130, first targeted controller 293 and second targeted controller 295. The remote network may be characterized by having a pre-defined (or knowable by the administration module) network structure and dependency relations.

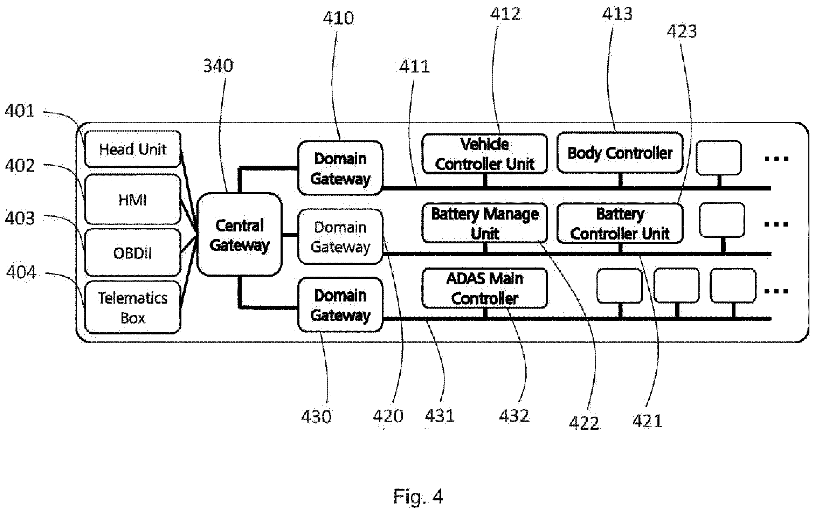

There may be one or plural interfaces 280 provided in the remote network. The or each interface may on the one hand, interface with the verification module and / or agent module, and communicate with the administration module on the other. The interfaces may also be represented by communication modules (320, Figure 4).

The agent module 120 and verification module 130 may be co-located in the remote system, or separately. The agent module 120 and verification module 130 may be controlled by, or comprised in a patch orchestrator 290. The patch orchestrator may share some of the functionality of agent module. A patch orchestrator may comprise a logical entity which is located in the remote system and in charge of starting, monitoring and managing the updating processes in the remote system. Comparing the patch orchestrator and agent module(s), the patch orchestrator coordinates the updating process in a centralized way.

Further implementations of the administration module 110, verification module 120 and agent module 130 of Figures 1 and 2 are detailed below.

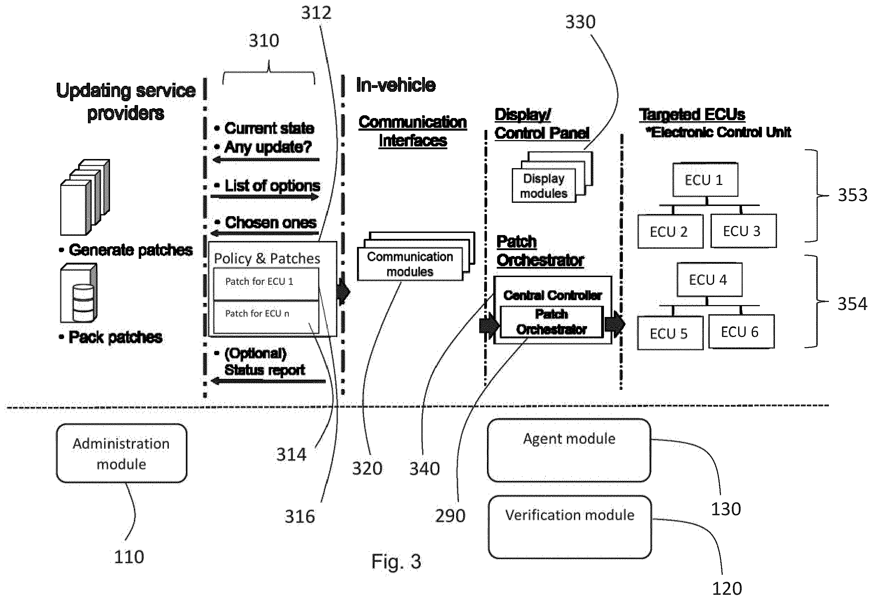

Figure 3 shows an exemplary embodiment of the invention in use to update electronic control units (abbreviated in English to ECU) in a remote network in a vehicle. The architecture 100 comprising the administration module 110, verification module 120 and agent module 130 is shown for reference at the bottom of Figure 3, as said modules perform the described above actions in the update procedure.

In this embodiment, the remote network is shown as comprising communication modules 320, display or control modules 330, a central controller 340 comprising the patch orchestrator 290, and targeted electronic control units, ECU, numbered ECU 1 to ECU 6. The ECU are divided into two groups 353 and 354 according to their characteristics, such as connection bus, homogeneous or heterogeneous structure. Group 353 comprises ECU1, ECU2 and ECU3; group 354 comprises ECU4, ECU5 and ECU6. The communication module 320 may perform the function of interfaces and / or may comprise various kinds of connectivity functions such as cellular module, On-board diagnostics II (abbreviated in English to OBD II) Interface, Bluetooth / for near-field communications (abbreviated in English to NFC).

The update procedure may start by communicating 310 a current state of the remote network to updating service providers that are external to the remote network. The remote network may query whether an update is available, and (not shown) provide context information to the administration module 110. The relevant function module in the remote network may then communicate with the updating service providers to determine which updates are available, and which ECU to update. The administration module will then formulate a policy 312, which in this embodiment is downloaded in a package with the relevant patches 314, 316 for the targeted ECUs. The policy may be formulated responsive to a perceived need to update certain selected ECUs. The patches for the ECUs may be all or only selected ECUs within the shown ECU, according to the policy.

The downloaded package is then communicated to the central controller 340 and patch orchestrator 290, for verification by the verification module 120 and subsequently to the agent module 130 for updating the controllers. A status report about the update may be sent to the administration module.

The update procedure is discussed in more detail below. The skilled person will realize that not all of the described actions are necessary or may be implemented in other ways to those described.

The policy 312 may contain preconditions for installation, update policy and error handing procedures. Preconditions may include certain limitations on the system status, such as driving speed of a vehicle or available battery of an electronic-vehicle. Update policies may specify a group of controllers for atomic update or one-way dependency for a targeted controller on another one. Error handling procedures specify how to react when patching errors happen. For instance, the number of retrying and the rollback range (i.e. which controllers should be rolled back) are defined.

After the package is downloaded, patch orchestrator takes necessary steps such as integrity and authenticity checking. The verification module then steps in to analyze the policy attached in the package, detect current system status, check preconditions, and check patch dependency. When preconditions are satisfied and all checking actions are passed, the verification module informs each agent module to perform patching processes.

The agent module analyzes the policy and performs patching according to the policy. Moreover, when encountering any patching error, agent module takes reaction according to the context-aware policy, such as retrying for several times or rolling back other dependent controllers. Agent modules then report the execution result to verification module. The verification module would keep the result and may react accordingly.

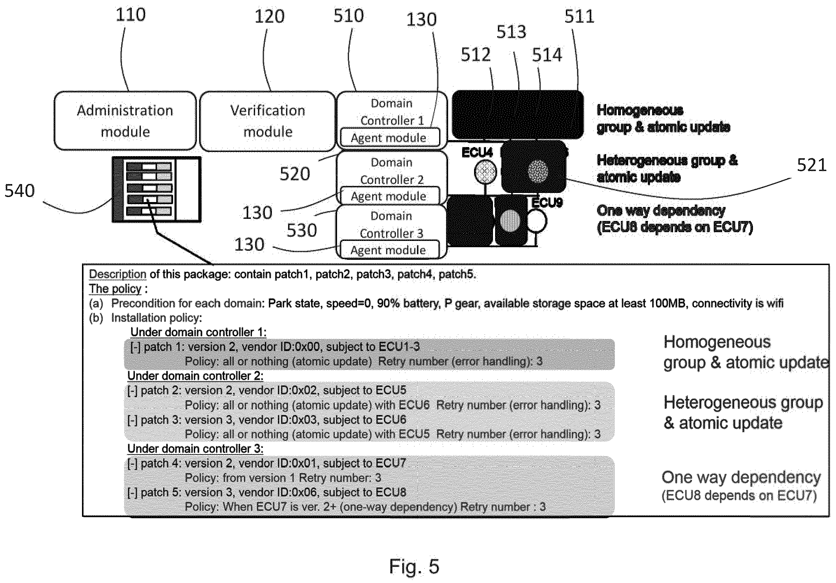

Figure 4 shows examples of controllers that may be in a remote system, such as the ECU in the vehicle of Figure 3. Each controller in Figure 4 may be represented by a placeholder ECU such as those in Figure 5 or the controllers or ECU in other embodiments.

A group of controllers may consist of heterogeneous controllers, where each of them has different hardware components and system configuration. Taking a vehicle as an example, a group of controllers may have the structure and topology as shown in Figure 4.

In Figure 4, there is a head unit 401, a HMI 402, a OBD II 403, a Telematics Box 404, a vehicle controller unit 412, a body controller 413, a battery manage unit 422, a battery controller unit 423 and an ADAS Main Controller 432. All of these are controllers.

The possibility of connecting other controllers is shown by the unlabeled modules to the right of the labelled modules. HMI stands for human-machine interface, OBD II refers to On-board diagnostics II interface, and ADAS refers to advanced driver-assistant systems.

The head unit 401, HMI 402, OBD II 403, a Telematics Box 404 are shown as individually connected to a central gateway 340, which may act as a central control or access point for the remote network or gateway function. The central gateway 340 may oversee the domain gateways 410, 420 and 430.

Controllers depicted schematically to the left of the central gateway 340 and ones to the right have different functionality in the system. For example, HMI may be a touch panel nearby the driver cockpit. They may communicate with each other via the network through the central gateway. For example, vehicle control unit may send speed information to head-unit to show the information to the driver.

In this embodiment, the vehicle controller unit 412 and body controller unit 413 are in the same group. Also, the battery management unit 422 and battery controller unit 423 are in another group. The skilled person will be aware that other cases may be different e.g. vehicle controller unit and body controller unit may belong to two different groups.

Domain controllers 410, 420 and 430 are connected to the central gateway 340. The domain controllers are each responsible for different groups of controllers to which they are respectively connected.

Domain gateway 410 is responsible for the vehicle controller unit 412 and the body controller 413 which are connected via communication means 411 to the domain controller 410.

Domain gateway 420 is responsible for the ADAS Main Controller 432 which is connected via communication means 431 to the domain controller 430.

Domain gateway 430 is responsible for the battery manage unit 422 and the battery controller unit 423 which are connected via communication means 421 to the domain controller 420.

Figure 5 is an embodiment showing different types of groups of controllers, and the corresponding policy formulated by the administration module. The embodiment is particularly suited to the remote network being a network in a vehicle.

Several domain controllers 510, 520, 530 connect sub-groups of controllers. The domain controllers may be connected to a central controller. In this embodiment, the administration module 110 is deployed in service provider side. The verification module 12 is deployed within a central controller (not shown). Agent modules 130 are deployed in domain controllers.

ECU1 512, ECU2 513 and ECU3 514 comprise a group of controllers 511. Group of controllers 511 are homogenous, and connected to the same domain controller 1, 510 which comprises agent module 130. The grey background surrounding ECU1 ECU2 and ECU3 indicates that the three controllers undergo atomic (all or nothing) update.

ECU4, ECU5 and ECU6 together comprise another group of controllers. ECU4, ECU5 and ECU6 are connected and controlled by domain controller 2, 520 which comprises agent module 130. The domain controller 2 and agent module are not the same as the domain controller 1 and its respective agent module. This group of controllers is heterogeneous, i.e. each of ECU4, ECU5 and ECU6 has different structure. In the group, only ECU5 and ECU6 undergo atomic update, as indicated by the grey background surrounding ECU5 and ECU6. However, as ECU5 and ECU6 are not the same, the corresponding part of the policy 540 for these controllers is different. As shown in the policy, the difference is that each has different update versions. However, they undergo atomic update (i.e. all or nothing for the targeted controllers ECU5 and ECU6). And as an example the number of retries is the same. As ECU5 and ECU6 only undergo update, they comprise a non-limiting example of a grouping 521 within a group of controllers.

ECU7, ECU8 and ECU9 comprise another group of controllers. ECU7, ECU8 and ECU9 are connected and controlled by domain controller 3, 530 which comprises agent module 130. The domain controller 3 and agent module are not the same as the domain controller 1 and its respective agent module, and not the same as domain controller 2 and its respective agent module. In the group of ECU7, ECU8 and ECU9, only ECU 7 and ECU8 are targeted to undergo update, as indicated by the grey background surrounding ECU7 and ECU8. ECU7 and ECU8 do not undergo atomic update, but undergo update in sequence. This is referred to as one-way dependency: the part of the policy for the group of ECU7 and ECU8 under domain controller 3 specifies that the ECU8 only undergoes update when ECU7 has undergone update. ECU7 and ECU8 are further specified as having different versions in the update. The policy and corresponding actions are disclosed in more detail below.

As an example but not limited to this particular example, a policy is defined and the execution flow of the patch system is described in more detail as follows. The policy contains preconditions for the whole package, update policy and error handling procedure for three subgroups of controllers. The preconditions specify when (under what conditions) the update procedure can be executed. In this example, they are about the vehicle park state, speed, battery, storage space and connectivity. There are three types of update policies shown in this example. The first one is atomic update for a group of homogeneous controllers. If any error happens, agent module in domain controller 1 would trigger the update for at most three times (retry number is defined as three in the policy). If errors still cannot be solved, other controllers in the group would be rolled back to maintain the consistency. The second one is atomic update for the group of heterogeneous controllers (ECU5 and ECU6). Similarly, if any error happens, agent module in domain controller 2 would trigger the update for at most three times. If errors still cannot be solved, the other controller (ECU5 or ECU6) would be rolled back to maintain the consistency. The third policy is one-way dependency, where ECU8 depends on ECU7. There are patches for both ECU7 and ECU8. Hence ECU 7 will be updated first. If ECU7 is updated successfully, ECU8 is then updated.

Agent modules then (optionally) report the results to policy decision and enforcement point for logging the current system status.

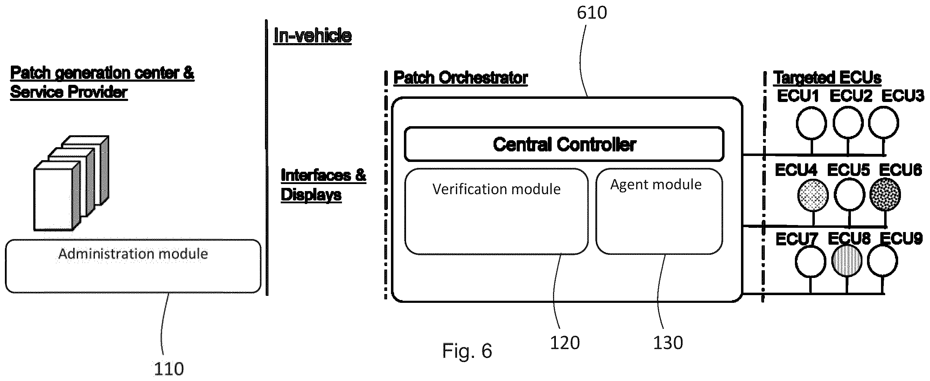

Figure 6 shows an embodiment of the invention in which the verification module 120 and the agent module 130 are co-located inside one physical controller, such as the central controller 610. In other aspects, reference is made to the embodiment of Figure 5.

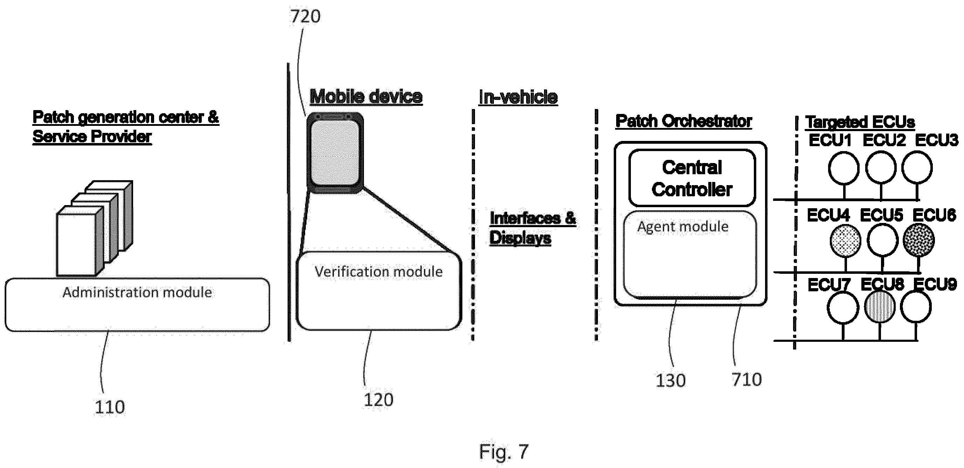

Figure 7 shows an embodiment of the invention in which the verification module 120 is located outside the remote network, such as in a mobile controller 720. The agent module 130 is shown as located in the central controller 710, although the agent module may alternatively be located in domain controllers.

In this embodiment, certain one-way or mutual authentication flow occurs between the mobile controller 720 and the central controller 710. After this authentication flow, the mobile controller acts as part of the vehicle and performs the functions of the verification module 120.

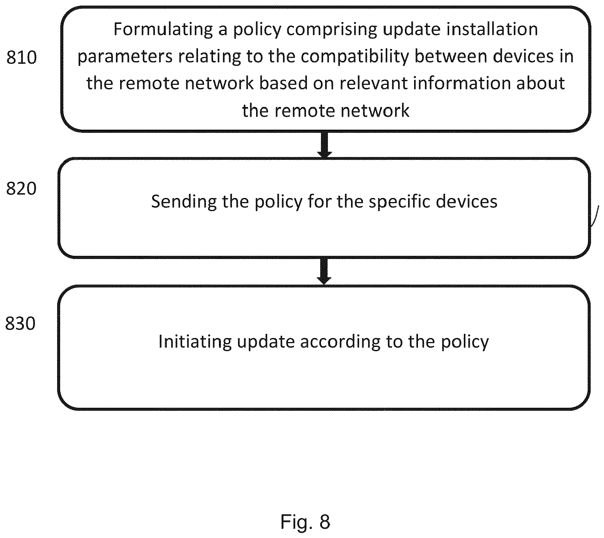

Figure 8 shows some steps of a method embodiment corresponding to the actions that the administration module and agent modules are configured to perform, as described herein.

In the method, a policy for updating controllers in a remote network is formulated 810. When the administration module formulates the policy, it takes account of relevant information about the remote network. The relevant information relates to the compatibility of between controllers in the remote network, so that the policy can be formulated to be compatible. Thus, if the method is applied to the remote network shown in Figure 5, context information about each of the three different groups of controllers would be provided to the administration unit. The context information may refer to that as disclosed herein in other embodiments, and may specify whether each group is homogenous or heterogeneous or otherwise, which controller can be updated with which version, whether there are sub groups, which controllers to target for update, whether each group or grouping undergoes atomic update or one-way dependency type update.

In an optional step, the policy is formulated to include installation criteria. These may include the parameters shown as preconditions in the policy 540 of Figure 5.

In another optional step, the policy is formulated to include error handling information for the targeted controllers. These may include the rollback or retry parameters shown for the respective ECU in the policy 540 of Figure 5.

The formulated policy is then sent 820 from the server to the remote network via suitable communication channels known in the art, including wireless, WIFI, Bluetooth, Ethernet connection and other transmission mediums, including those provided by current or future communication standards e.g. LTE, LTE-A, 5G.

The remote network receives the policy, and on receipt of the corresponding updates - whether separately or in a combined package - initiates 830 update of the controllers. An agent module implements the policy to perform the update for the targeted controllers. The agent module may be located in domain controllers or in a central domain controller.

In an optional step, before initiating update, a verification module may perform verification of the policy and determine if all or parts of the corresponding update should be installed, based on information about the remote network in particular about the controllers available to the verification module.

If errors are encountered during update, the agent module may process them according to the error handling configuration information specified in the policy.

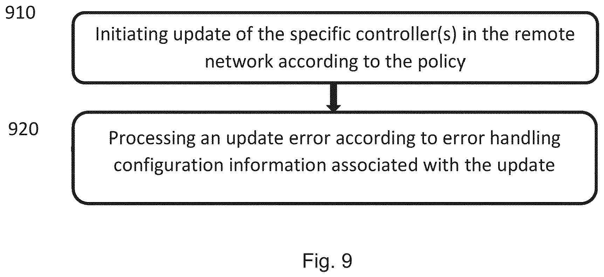

Figure 9 shows some steps of a method embodiment corresponding to the error handling actions that the agent module(s) is configured to perform.

A function module in the remote network, such as the agent module, initiates 910 update of the specific controllers in the remote network, as specified in the policy. The policy may be for example the policy 540 shown in Figure 5.

When the update does not succeed on a first attempt for a specific controller, the agent module will take appropriate error handling measures to process 920 the update error. This might be attempting a number of retries, such as 3, or immediately rolling back the related controllers in a group of controllers, rolling back after a number of retries have all failed. The error handling configuration information is associated with the update, and may be provided with the update, or in a policy, or separately.

In an optional step, a status of the update is indicated to a verification module, and / or the administration module. The status may include a report of error handling. The verification module may log the report.

Furthermore, methods according to embodiments of the invention may be implemented in a computer program, having code means, which when run by processing means causes the processing means to execute the steps of the method. The computer program is included in a computer readable medium of a computer program product. The computer readable medium may comprise of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that the modules may comprise the necessary processing capabilities in the form of e.g., functions, means, units, elements, etc., for performing the present solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, power supply units, power feeders, communication interfaces, communication protocols, etc. which are suitably arranged together for performing the present solution.

Especially, the processors) of the modules 110 120 and 130 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and control functions, such as call processing control, user interface control, or the like.

Finally, it should be understood that the invention is not limited to the embodiments described above, but also relates to and incorporates all embodiments within the scope of the appended independent claims.

## Claims

1. A server (240) comprising an administration module (110) configured to:
receive context information from a remote network (270) of a vehicle, wherein the context information comprises compatibility of a plurality of electronic control units, ECUs, in the remote network (270) of the vehicle, and the compatibility of the plurality of ECUs indicates whether each ECU is compatible individually with an update;
formulate a policy for governing a first update for one or more ECUs of the plurality of ECUs based on the context information from the remote network (270) of the vehicle, wherein the policy comprises an installation policy, and the installation policy comprises respective update installation instructions relating to the compatibility of the one or more ECUs;
prepare the first update for the one or more ECUs in compliance with the policy; and
send the policy and the first update to the remote network (270) for updating the one or more ECUs in the remote network (270).

2. The server (240) of claim 1, wherein the context information further comprises compatibility between the plurality of ECUs, wherein:
the compatibility between the plurality of ECUs defines whether there are dependency relations in any sequence of updates of the plurality of ECUs, and/or whether the plurality of ECUs are a homogenous group for atomic update or comprise a heterogeneous group.

3. The server (240) of claim 2, wherein the installation policy further specifies update installation instructions relating to the compatibility between the one or more ECUs.

4. The server (240) of any one of claims 1 to 3, wherein the policy further comprises installation criteria relating to parameters of the remote network (270), and the installation criteria comprises one or more of: a status of a system associated with the remote network (270), an available power supply, an available storage space, a connectivity of the remote network (270), a mobility of the remote network (270), or a velocity of the remote network (270).

5. The server (240) of claim 1, wherein the administration module (110) is further configured to execute the instructions to:
provide error handling information for the first update, wherein the error handling information comprises error handling configuration information in event of an error occurring during the update of the one or more ECUs, and wherein the error handling configuration information comprises rollback procedures or a number of update retry attempts.

6. The server (240) of any one of claims 1 to 5, wherein the administration module (110) is configured to send the policy and the first update for the one or more ECUs to the remote network (270) together in a package.

7. The server (240) of any one of claims 1 to 6, wherein the context information further comprises at least one of information about: hardware of the one or more ECUs, a structure of the one or more ECUs, or a topology of the remote network (270).

8. A system comprising a vehicle and a server (240), wherein the vehicle comprises a plurality of electronic control units, ECUs, and the vehicle is configured to:
send context information to the server (240), the context information comprises compatibility of the plurality of ECUs, and the compatibility of the plurality of ECUs indicates whether each ECU is compatible individually with an update;
receive, from the server (240), a first update for one or more ECUs of the plurality of ECUs and a policy for governing the first update, wherein the policy is formulated based on the context information, the policy comprises an installation policy, and the installation policy comprises respective update installation instructions relating to the compatibility of the one or more ECUs;
implement the first update according to the policy governing the first update, for the one or more ECUs.

9. The system of claim 8, wherein the vehicle is configured to:
execute error handling information for the first update, wherein the error handling information comprises error handling configuration information in event of an error occurring during update of the one or more ECUs, the error handling configuration information including rollback procedures or a number of update retry attempts.

10. The system of claim 8 or 9, wherein the policy further comprises installation criteria relating to parameters of the vehicle, and the installation criteria comprises one or more of: a status of a system associated with the vehicle, an available power supply, an available storage space, a connectivity of the vehicle, a mobility of the vehicle, or a velocity of the vehicle.

11. The system of any one of claims 8 to 10, wherein the context information further comprises at least one of information about: hardware of the one or more ECUs, a structure of the one or more ECUs, or a topology of the remote network (270).

12. A method for updating ECUs in a remote network (270) of a vehicle, the method comprising:
receiving context information from the remote network (270) of the vehicle, wherein the context information comprises compatibility of a plurality of electronic control units, ECUs, in the remote network (270) of the vehicle, and the compatibility of the plurality of ECUs indicates whether each ECU is compatible individually with an update;
formulating a policy for governing a first update for one or more ECUs of the plurality of ECUs based on the context information from the remote network (270) of the vehicle, wherein the policy comprises an installation policy, and the installation policy comprises respective update installation instructions relating to the compatibility of the one or more ECUs;
preparing the first update for the one or more ECUs in compliance with the policy; and
sending the policy and the first update to the remote network (270) for updating the one or more ECUs in the remote network (270).

13. The method of claim 12, wherein the context information further comprises compatibility between the plurality of ECUs, wherein:
the compatibility between the plurality of ECUs defines whether there are dependency relations in any sequence of updates of the plurality of ECUs, and/or whether the plurality of ECUs are a homogenous group for atomic update or comprise a heterogeneous group.

14. The method of claim 13, wherein the installation policy further specifies update installation instructions relating to the compatibility between the one or more ECUs.

15. A vehicle comprising an agent module (130) configured to:
send context information to a server (240), wherein the context information comprises compatibility of a plurality of electronic control units, ECUs, and the compatibility of the plurality of ECUs indicates whether each ECU is compatible individually with an update;
receive, from the server, a first update for one or more ECUs of the plurality of ECUs and a policy for governing the first update, wherein the policy is formulated based on the context information, the policy comprises an installation policy, and the installation policy comprises respective update installation instructions relating to the compatibility of the one or more ECUs;
implement the first update according to the policy governing the first update, for the one or more ECUs.

## Patentansprüche

1. Server (240), der ein Administrationsmodul (110) umfasst, ausgelegt zum:
Empfangen von Kontextinformationen von einem entfernten Netzwerk (270) eines Fahrzeugs, wobei die Kontextinformationen Kompatibilität von mehreren elektronischen Steuereinheiten bzw. ECUs in dem entfernten Netzwerk (270) des Fahrzeugs umfassen und die Kompatibilität der mehreren ECUs angibt, ob jede ECU einzeln mit einer Aktualisierung kompatibel ist;
Formulieren einer Strategie zum Regeln einer ersten Aktualisierung für eine oder mehrere ECUs der mehreren ECUs auf der Basis der Kontextinformationen von dem entfernten Netzwerk (270) des Fahrzeugs, wobei die Strategie eine Installationsstrategie umfasst und die Installationsstrategie jeweilige Aktualisierungs-Installationsanweisungen in Bezug auf die Kompatibilität der einen oder mehreren ECUs umfasst;
Erstellen der ersten Aktualisierung für die eine oder mehreren ECUs im Einklang mit der Strategie; und
Senden der Strategie und der ersten Aktualisierung zu dem entfernten Netzwerk (270) zum Aktualisieren der einen oder mehreren ECUs in dem entfernten Netzwerk (270).

2. Server (240) nach Anspruch 1, wobei die Kontextinformationen ferner Kompatibilität zwischen den mehreren ECUs umfassen, wobei:
die Kompatibilität zwischen den mehreren ECUs definiert, ob es Abhängigkeitsbeziehungen in einer beliebigen Sequenz von Aktualisierungen der mehreren ECUs gibt und/oder ob die mehreren ECUs eine homogene Gruppe für atomische Aktualisierung sind oder eine heterogene Gruppe umfassen.

3. Server (240) nach Anspruch 2, wobei die Installationsstrategie ferner Aktualisierungs-Installationsanweisungen in Bezug auf die Kompatibilität zwischen der einen oder den mehreren ECUs spezifiziert.

4. Server (240) nach einem der Ansprüche 1 bis 3, wobei die Strategie ferner Installationskriterien in Bezug auf Parameter des entfernten Netzwerks (270) umfasst und die Installationskriterien eines oder mehrere der Folgenden umfassen: ein Status eines dem entfernten Netzwerk (270) zugeordneten Systems, eine verfügbare Stromversorgung, einen verfügbaren Speicherungsplatz, eine Konnektivität des entfernten Netzwerks (270), eine Mobilität des entfernten Netzwerks (270) oder eine Geschwindigkeit des entfernten Netzwerks (270).

5. Server (240) nach Anspruch 1, wobei das Administrationsmodul (110) ferner ausgelegt ist zum Ausführen der Anweisungen zum:
Bereitstellen von Fehlerbehandlungsinformationen für die erste Aktualisierung, wobei die Fehlerbehandlungsinformationen Fehlerbehandlungs-Konfigurationsinformationen im Fall des Auftretens eines Fehlers während der Aktualisierung der einen oder mehreren ECUs umfassen und wobei die Fehlerbehandlungs-Konfigurationsinformationen Zurückrollprozeduren oder eine Anzahl von Aktualisierungs-Neuversuchen umfassen.

6. Server (240) nach einem der Ansprüche 1 bis 5, wobei das Administrationsmodul (110) ausgelegt ist zum Senden der Strategie und der ersten Aktualisierung für die eine oder mehreren ECUs zu dem entfernten Netzwerk (270) zusammen in einem Paket.

7. Server (240) nach einem der Ansprüche 1 bis 6, wobei die Kontextinformationen ferner Informationen über Folgendes umfassen: Hardware der einen oder mehreren ECUs und/oder eine Struktur der einen oder mehreren ECUs und/oder eine Topologie des entfernten Netzwerks (270).

8. System, das ein Fahrzeug und einen Server (240) umfasst, wobei das Fahrzeug mehrere elektronische Steuereinheiten bzw. ECUs umfasst und das Fahrzeug ausgelegt ist zum:
Senden von Kontextinformationen zu dem Server (240), wobei die Kontextinformationen Kompatibilität von mehreren ECUs umfassen und die Kompatibilität der mehreren ECUs angibt, ob jede ECU einzeln mit einer Aktualisierung kompatibel ist;
Empfangen einer ersten Aktualisierung für eine oder mehrere ECUs der mehreren ECUs und einer Strategie zum Regeln der ersten Aktualisierung von dem Server (240), wobei die Strategie auf der Basis der Kontextinformationen formuliert ist, die Strategie eine Installationsstrategie umfasst und die Installationsstrategie jeweilige Aktualisierungs-Installationsanweisungen in Bezug auf die Kompatibilität der einen oder mehreren ECUs umfasst;
Implementieren der ersten Aktualisierung für die eine oder mehreren ECUs gemäß der die erste Aktualisierung regelnden Strategie.

9. System nach Anspruch 8, wobei das Fahrzeug ausgelegt ist zum:
Ausführen von Fehlerbehandlungsinformationen für die erste Aktualisierung, wobei die Fehlerbehandlungsinformationen Fehlerbehandlungs-Konfigurationsinformationen im Fall des Auftretens eines Fehlers während der Aktualisierung der einen oder mehreren ECUs umfassen, wobei die Fehlerbehandlungs-Konfigurationsinformationen Zurückrollprozeduren oder eine Anzahl von Aktualisierungs-Neuversuchen umfassen.

10. System nach Anspruch 8 oder 9, wobei die Strategie ferner Installationskriterien in Bezug auf Parameter des Fahrzeugs umfasst und die Installationskriterien eines oder mehrere der Folgenden umfassen: einen Status eines dem Fahrzeug zugeordneten Systems, eine verfügbare Stromversorgung, einen verfügbaren Speicherungsplatz, eine Konnektivität des Fahrzeugs, eine Mobilität des Fahrzeugs oder eine Geschwindigkeit des Fahrzeugs.

11. System nach einem der Ansprüche 8 bis 10, wobei die Kontextinformationen ferner Informationen über Folgendes umfassen: Hardware der einen oder mehreren ECUs und/oder eine Struktur der einen oder mehreren ECUs und/oder eine Topologie des entfernten Netzwerks (270).

12. Verfahren zum Aktualisieren von ECUs in einem entfernten Netzwerk (270) eines Fahrzeugs, wobei das Verfahren Folgendes umfasst:
Empfangen von Kontextinformationen von dem entfernten Netzwerk (270) des Fahrzeugs, wobei die Kontextinformationen Kompatibilität von mehreren elektronischen Steuereinheiten bzw. ECUs in dem entfernten Netzwerk (270) des Fahrzeugs umfassen und die Kompatibilität der mehreren ECUs angibt, ob jede ECU einzeln mit einer Aktualisierung kompatibel ist;
Formulieren einer Strategie zum Regeln einer ersten Aktualisierung für eine oder mehrere ECUs der mehreren ECUs auf der Basis der Kontextinformationen von dem entfernten Netzwerk (270) des Fahrzeugs, wobei die Strategie eine Installationsstrategie umfasst und die Installationsstrategie jeweilige Aktualisierungs-Installationsanweisungen in Bezug auf die Kompatibilität der einen oder mehreren ECUs umfasst;
Erstellen der ersten Aktualisierung für die eine oder mehreren ECUs im Einklang mit der Strategie; und
Senden der Strategie und der ersten Aktualisierung zu dem entfernten Netzwerk (270) zum Aktualisieren der einen oder mehreren ECUs in dem entfernten Netzwerk (270).

13. Verfahren nach Anspruch 12, wobei die Kontextinformationen ferner Kompatibilität zwischen den mehreren ECUs umfassen, wobei:
die Kompatibilität zwischen den mehreren ECUs definiert, ob es Abhängigkeitsbeziehungen in einer beliebigen Sequenz von Aktualisierungen der mehreren ECUs gibt und/oder ob die mehreren ECUs eine homogene Gruppe für atomische Aktualisierung sind oder eine heterogene Gruppe umfassen.

14. Verfahren nach Anspruch 13, wobei die Installationsstrategie ferner Aktualisierungs-Installationsanweisungen in Bezug auf die Kompatibilität zwischen der einen oder den mehreren ECUs spezifiziert.

15. Fahrzeug, das ein Agent-Modul (130) umfasst, ausgelegt zum:
Senden von Kontextinformationen zu einem Server (240), wobei die Kontextinformationen Kompatibilität von mehreren elektronischen Steuereinheiten bzw. ECUs umfassen und die Kompatibilität der mehreren ECUs angibt, ob jede ECU einzeln mit einer Aktualisierung kompatibel ist;
Empfangen einer ersten Aktualisierung für eine oder mehrere ECUs der mehreren ECUs und einer Strategie zum Regeln der ersten Aktualisierung von dem Server, wobei die Strategie auf der Basis der Kontextinformationen formuliert ist, die Strategie eine Installationsstrategie umfasst und die Installationsstrategie jeweilige Aktualisierungs-Installationsanweisungen in Bezug auf die Kompatibilität der einen oder mehreren ECUs umfasst;
Implementieren der ersten Aktualisierung für die eine oder mehreren ECUs gemäß der die erste Aktualisierung regelnden Strategie.

## Revendications

1. Serveur (240) comprenant un module d'administration (110) configuré pour :
recevoir des informations de contexte en provenance d'un réseau distant (270) d'un véhicule, les informations de contexte comprenant une compatibilité d'une pluralité d'unités de commande électroniques, notées ECU, dans le réseau distant (270) du véhicule, et la compatibilité de la pluralité d'ECU indiquant si chaque ECU est individuellement compatible avec une mise à jour ;
formuler une politique pour régir une première mise à jour pour une ou plusieurs ECU de la pluralité d'ECU sur la base des informations de contexte en provenance du réseau distant (270) du véhicule, la politique comprenant une politique d'installation, et la politique d'installation comprenant des instructions d'installation de mise à jour respectives relatives à la compatibilité des une ou plusieurs ECU ;
préparer la première mise à jour pour les une ou plusieurs ECU en conformité avec la politique ; et
envoyer la politique et la première mise à jour au réseau distant (270) pour mettre à jour les une ou plusieurs ECU dans le réseau distant (270).

2. Serveur (240) selon la revendication 1, dans lequel les informations de contexte comprennent en outre une compatibilité entre la pluralité d'ECU,
la comptabilité entre la pluralité d'ECU définissant s'il existe des relations de dépendance dans une séquence quelconque de mises à jour de la pluralité d'ECU, et/ou si la pluralité d'ECU constituent un groupe homogène pour une mise à jour atomique ou comprennent un groupe hétérogène.

3. Serveur (240) selon la revendication 2, dans lequel la politique d'installation stipule en outre des instructions d'installation de mise à jour relatives à la compatibilité entre les une ou plusieurs ECU.

4. Serveur (240) selon l'une quelconque des revendications 1 à 3, dans lequel la politique comprend en outre des critères d'installation relatifs à des paramètres du réseau distant (270), et les critères d'installation comprennent : un état d'un système associé au réseau distant (270) et/ou une alimentation électrique disponible et/ou un espace de stockage disponible et/ou une connectivité du réseau distant (270) et/ou une mobilité du réseau distant (270) et/ou une vitesse du réseau distant (270).

5. Serveur (240) selon la revendication 1, dans lequel le module d'administration (110) est configuré en outre pour exécuter les instructions pour :
fournir des informations de traitement d'erreur pour la première mise à jour, les informations de traitement d'erreur comprenant des informations de configuration de traitement d'erreur en cas de survenue d'une erreur au cours de la mise à jour des une ou plusieurs ECU, et les informations de configuration de traitement d'erreur comprenant des procédures de retour en arrière ou un nombre de nouvelles tentatives de mise à jour.

6. Serveur (240) selon l'une quelconque des revendication 1 à 5, dans lequel le module d'administration (110) est configuré pour envoyer, conjointement dans un paquet, la politique et la première mise à jour pour les une ou plusieurs ECU au réseau distant (270).

7. Serveur (240) selon l'une quelconque des revendications 1 à 6, dans lequel les informations de contexte comprennent en outre des informations concernant : un matériel des une ou plusieurs ECU et/ou une structure des une ou plusieurs ECU et/ou une topologie du réseau distant (270).

8. Système comprenant un véhicule et un serveur (240), le véhicule comprenant une pluralité d'unités de commande électroniques, notées ECU, et le véhicule étant configuré pour :
envoyer des informations de contexte au serveur (240), les informations de contexte comprenant une compatibilité de la pluralité d'ECU, et la compatibilité de la pluralité d'ECU indiquant si chaque ECU est individuellement compatible avec une mise à jour ;
recevoir, en provenance du serveur (240), une première mise à jour pour une ou plusieurs ECU de la pluralité d'ECU et une politique pour régir la première mise à jour, la politique étant formulée sur la base des informations de contexte, la politique comprenant une politique d'installation, et la politique d'installation comprenant des instructions d'installation de mise à jour respectives relatives à la compatibilité des une ou plusieurs ECU ;
mettre en oeuvre la première mise à jour selon la politique régissant la première mise à jour, pour les une ou plusieurs ECU.

9. Système selon la revendication 8, dans lequel le véhicule est configuré pour :
exécuter des informations de traitement d'erreur pour la première mise à jour, les informations de traitement d'erreur comprenant des informations de configuration de traitement d'erreur en cas de survenue d'une erreur au cours d'une mise à jour des une ou plusieurs ECU, les informations de configuration de traitement d'erreur comprenant des procédures de retour en arrière ou un nombre de nouvelles tentatives de mise à jour.

10. Système selon la revendication 8 ou 9, dans lequel la politique comprend en outre des critères d'installation relatifs à des paramètres du véhicule, et les critères d'installation comprennent : un état d'un système associé au véhicule et/ou une alimentation électrique disponible et/ou un espace de stockage disponible et/ou une connectivité du véhicule et/ou une mobilité du véhicule et/ou une vitesse du véhicule.

11. Système selon l'une quelconque des revendications 8 à 10, dans lequel les informations de contexte comprennent en outre des informations concernant : un matériel des une ou plusieurs ECU et/ou une structure des une ou plusieurs ECU et/ou une topologie du réseau distant (270).

12. Procédé de mise à jour d'ECU dans un réseau distant (270) d'un véhicule, le procédé comprenant :
la réception d'informations de contexte en provenance du réseau distant (270) du véhicule, les informations de contexte comprenant une compatibilité d'une pluralité d'unités de commande électroniques, notées ECU, dans le réseau distant (270) du véhicule, et la compatibilité de la pluralité d'ECU indiquant si chaque ECU est individuellement compatible avec une mise à jour ;
la formulation d'une politique pour régir une première mise à jour pour une ou plusieurs ECU de la pluralité d'ECU sur la base des informations de contexte en provenance du réseau distant (270) du véhicule, la politique comprenant une politique d'installation, et la politique d'installation comprenant des instructions d'installation de mise à jour respectives relatives à la compatibilité des une ou plusieurs ECU ;
la préparation de la première mise à jour pour les une ou plusieurs ECU en conformité avec la politique ; et
l'envoi de la politique et de la première mise à jour au réseau distant (270) pour mettre à jour les une ou plusieurs ECU dans le réseau distant (270).

13. Procédé selon la revendication 12, dans lequel les informations de contexte comprennent en outre une compatibilité entre la pluralité d'ECU,
la comptabilité entre la pluralité d'ECU définissant s'il existe des relations de dépendance dans une séquence quelconque de mises à jour de la pluralité d'ECU, et/ou si la pluralité d'ECU constituent un groupe homogène pour une mise à jour atomique ou comprennent un groupe hétérogène.

14. Procédé selon la revendication 13, dans lequel la politique d'installation stipule en outre des instructions d'installation de mise à jour relatives à la compatibilité entre les une ou plusieurs ECU.

15. Véhicule comprenant un module agent (130) configuré pour :
envoyer des informations de contexte à un serveur (240), les informations de contexte comprenant une compatibilité d'une pluralité d'unités de commande électroniques, notées ECU, et la compatibilité de la pluralité d'ECU indiquant si chaque ECU est individuellement compatible avec une mise à jour ;
recevoir, en provenance du serveur, une première mise à jour pour une ou plusieurs ECU de la pluralité d'ECU et une politique pour régir la première mise à jour, la politique étant formulée sur la base des informations de contexte, la politique comprenant une politique d'installation, et la politique d'installation comprenant des instructions d'installation de mise à jour respectives relatives à la compatibilité des une ou plusieurs ECU ;
mettre en oeuvre la première mise à jour selon la politique régissant la première mise à jour, pour les une ou plusieurs ECU.
